# EUROPÄISCHE PATENTSCHRIFT

(11) **EP 2 313 661 B1**
(45) Veröffentlichungstag und Bekanntmachung des Hinweises auf die Patenterteilung: **28.12.2011**
(21) Anmeldenummer: 09777774.2
(22) Anmeldetag: 10.08.2009
(51) Int. Cl.: F16B 5/02, F16B 33/00, F16B 33/02, F01L 1/26

(54) **KONTERANORDNUNG**
COUNTER ARRANGEMENT
AGENCEMENT DE BLOCAGE PAR CONTRE-ÉCROU

(30) Priorität: 12.08.2008 DE 102008038628
(43) Veröffentlichungstag der Anmeldung: 27.04.2011
(73) Patentinhaber: Flaig, Hartmut, 78554 Aldingen (DE)
(72) Erfinder: Flaig, Hartmut, 78554 Aldingen (DE)
(74) Vertreter: Wagner, Kilian
(86) Internationale Anmeldenummer: PCT/EP2009/005782
(87) Internationale Veröffentlichungsnummer: WO 2010/017939

(56) Entgegenhaltungen:
- DE-U1-202004 019 153
- US-A- 5 186 128

## Beschreibung

Die Erfindung betrifft eine Konteranordnung gemäß dem Oberbegriff des Anspruchs 1 (aus der US 5,186,128 A bekannt) sowie einen Kipphebel gemäß dem Oberbegriff des Anspruchs 9.

Für viele technische Anwendungen ist es notwendig, eine Schraubverbindung, umfassend einen Gewindebolzen und ein den Gewindebolzen aufnehmendes Aufnahmeteil gegen Verdrehen durch Erhöhen der Reibkraft in den Gewindeflanken mit Hilfe einer Kontermutter (Gegenmutter) zu sichern. Im letzten Moment beim Anziehen der Konterschraube kommt es bei bekannten Konteranordnungen zwangsläufig zu einem (geringfügigen) Verdrehen des Gewindebolzen relativ zu dem Aufnahmeteil, was für die meisten Anwendungen unproblematisch ist.

Problematisch ist das zuvor beschriebene Mitverdrehen des Gewindebolzens beim Anziehen der Kontermutter jedoch bei technischen Anwendungen, bei denen es auf eine exakte Positionierung des Gewindebolzens ankommt. Eine derartige Anwendung ist ein sogenannter Kipphebel bei Verbrennungsmotoren. Kipphebel dienen dazu, die Kraft der Nockenwelle zum Öffnen von Einlass bzw. Auslassventilen zu übertragen. Bekannte Kipphebel weisen an ihrem freien Ende eine Konteranordnung auf, wobei ein Schenkel des Kipphebels als Aufnahmeteil mit Innengewindeprofil zur Aufnahme des Gewindebolzens (Einstellbolzens) dient. Mit derartigen Konteranordnungen kann der Ventilhub eingestellt werden, in dem der Gewindebolzen gegen ein Einstellblech definierter Dicke verdreht und sodann mit Hilfe der Kontermutter gekontert wird. Durch das Mitverdrehen des Gewindebolzens beim Anziehen der Kontermutter wird in der Praxis die Axialposition des Gewindebolzens relativ zu dem Aufnahmeteil und somit der Ventilhub unerwünscht verstellt.

Aus der US 5,186,128 A ist eine Konteranordnung mit einem ein eingängiges Außengewindeprofil aufweisenden Gewindeelement bekannt, das mit seinem Außengewindeprofil in ein eingängiges erstes Innengewindeprofil eines Aufnahmeteils schraubbar ist. Die Konteranordnung umfasst eine Kontermutter mit einem eingängigen zweiten Innengewindeprofil zum Verschrauben auf das Außengewindeprofil des Gewindeelementes. Bei der bekannten Konteranordnung kann es zu einem unerwünschten Mitverdrehen des Gewindeelementes kommen.

Der Erfindung liegt daher die Aufgabe zugrunde, eine Konteranordnung vorzuschlagen, mit der ein Verdrehen des ein Außengewindeprofil aufweisenden Gewindeelementes (insbesondere Gewindebolzen) einer Konteranordnung beim Anziehen der Kontermutter vermieden wird. Bevorzugt soll die Konteranordnung zum Einsatz an einem Kipphebel für Verbrennungsmotoren geeignet sein. Ferner besteht die Aufgabe darin, einen Kipphebel mit einer entsprechend optimierten Konteranordnung vorzuschlagen.

Diese Aufgabe wird hinsichtlich der Konteranordnung mit den Merkmalen des Anspruchs 1 und hinsichtlich des Kipphebels mit den Merkmalen des Anspruchs 9 gelöst. Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüche und/oder den Figuren offenbarten Merkmalen.

Die Erfindung hat erkannt, dass das unerwünschte Mitverdrehen des ein Außengewindeprofil aufweisenden Gewindeelementes beim Anziehen der Kontermutter auf die Profilform der zum Einsatz kommenden Gewinde zurückzuführen ist. Übliche Konteranordnungen weisen ein Gewindeprofil auf, bei dem die Teilflankenwinkel der beiden Gewindeprofilflanken den gleichen Winkel zu einer sich quer zur Längserstreckung des Gewindeelementes erstreckenden, also radial verlaufenden Achse aufweisen. Anders ausgedrückt sind die in Summe den Flankenwinkel bildenden Teilflankenwinkel von Gewindeprofilen bekannter Konteranordnung symmetrisch zu der vorgenannten Achse. Dies führt dazu, dass die Reibung im letzten Moment beim Anziehen der Kontermutter zwischen einer Flanke des Innengewindeprofils der Kontermutter und einer korrespondierenden Flanke des Außengewindeprofils des Gewindeelementes so groß wird, dass die Kontermutter das Gewindeelement in Umfangsrichtung mitschleppt. Um diesen Effekt zu vermeiden, schlägt die Erfindung erstmals vor, Gewindeprofile mit asymmetrischen Teilflankenwinkeln einzusetzen. Anders ausgedrückt sind bei einer nach dem Konzept der Erfindung ausgebildeten Konteranordnung jeweils zwei ein Teilflankenwinkelpaar bildende Teilflankenwinkel des jeweiligen Gewindeprofils ungleich bemessen, vorzugsweise derart, dass die zwischen dem Innengewindeprofil der Kontermutter und dem Außengewindeprofil des Gewindeelementes auftretende Reibung und das daraus resultierende Drehmoment beim Anziehen der Kontermutter nur so groß ist, dass sich das Gewindeelement beim Festziehen der Kontermutter nicht mit dieser mitdreht bzw. nicht von der Kontermutter in Umfangsrichtung mitgeschleppt wird. Hierdurch wird gewährleistet, dass das vorzugsweise als Gewindebolzen oder Gewindeschraube ausgebildete Gewindeelement seine einmal eingestellte exakte Relativposition zu dem das Gewindeelement aufnehmenden Aufnahmeteil beim Anziehen der Kontermutter beibehält, was insbesondere für die Anwendung der Konteranordnung bei einem Kipphebel in Verbrennungsmotoren interessant ist. Auf eine derartige Anwendung ist eine nach dem Konzept der Erfindung ausgebildete Konteranordnung jedoch nicht beschränkt. Im Rahmen der Erfindung ist eine Konteranordnung realisierbar, bei der sich die Kontermutter im angezogenen Zustand unmittelbar am Aufnahmeteil abstützt. Alternativ kann zwischen Kontermutter und Aufnahmeteil eine, insbesondere innengewindefreie Einlegescheibe vorgesehen werden.

In Weiterbildung der Erfindung ist mit Vorteil vorgesehen, dass der kleinere Teilflankenwinkel des Teilflankenwinkelpaares des (ersten) Innengewindeprofils des Aufnahmeteils derjenige Teilflankenwinkel ist, unter dem die der Kontermutter zugewandte Flanke des (ersten) Innengewindeprofils des Aufnahmeteils zu einer Radialen geneigt ist. Entsprechend ist der kleinere Teilflankenwinkel des Teilflankenwinkelpaares des Außengewindeprofils des Gewindeelementes derjenige Teilflankenwinkel, der dem kleineren Teilflankenwinkel des (ersten) Innengewindeprofils des Aufnahmeteils zugewandt ist. Zwangsläufig ist auch der kleinere Teilflankenwinkel des Teilflankenwinkelpaares des (zweiten) Innengewindeprofils der Kontermutter der Teilflankenwinkel, der derjenigen Flanke des Außengewindeprofils zugeordnet ist, die der zur Radialen am steilsten geneigten Flanke des Außengewindeprofils des Gewindeelementes zugewandt ist. Bei einer zuvor beschriebenen Anordnung des jeweiligen kleineren Teilflankenwinkels wird erreicht, dass die Keilwirkung beim Anziehen der Kontermutter zwischen dem Außengewindeprofil des Gewindeelementes und dem (ersten) Innengewindeprofil des Aufnahmeteils größer ist als zwischen dem Außenprofil des Gewindeelementes und dem (zweiten) Innengewindeprofil der Kontermutter, was wiederum darauf zurückzuführen ist, dass im letzten Moment beim Anziehen der Kontermutter sich die Kontermutter, bzw. das (zweite) Innenprofil der Kontermutter, mit der zur Radialen steiler geneigten, also einen kleineren Teilflankenwinkel aufweisenden Gewindeprofilflanke an einer korrespondierenden, ebenso steil zu einer Radialen geneigten Gewindeprofilflanke des Außengewindeprofils des Gewindeelementes abstützt, wohingegen sich die flacher zu einer Radialen geneigten Außengewindeprofilflanke des Gewindeelementes an der korrespondierenden flacher geneigten Innengewindeprofilflanke des (ersten) Innengewindeprofils des Aufnahmeteils abstützt.

Ganz besonders bevorzugt beträgt der Unterschied zwischen den Teilflankenwinkeln jedes Teilflankenwinkelpaares jedes Gewindeprofils der Konteranordnung etwa 1° bis 25°, vorzugsweise etwa 5° bis etwa 10° bis etwa 15°. Besonders gute Ergebnisse wurden bei einer Winkeldifferenz von etwa 10° realisiert.

Theoretisch ist es denkbar, als Gewindeprofile Sägezahnprofile einzusetzen, da diese unterschiedlich große Teilflankenwinkel aufweisen. Besonders bevorzugt ist es jedoch, wenn keine der Flanken der zum Einsatz kommenden Gewindeprofile mit einer Radialen zur Deckung kommt, sondern es ist bevorzugt, dass jeder Teilflankenwinkel (Winkel zwischen einer Gewindeprofilflanke und einer Radialen) größer als 0°, vorzugsweise größer als 5°, ganz besonders bevorzugt größer als 10° ist.

Im Hinblick auf die Gewährleistung einer optimierten Festigkeit der angezogenen Konteranordnung ist es bevorzugt, wenn der von jeweils einem Teilflankenwinkelpaar aufgespannte Flankenwinkel aus einem Wertebereich zwischen etwa 40° und etwa 70°, vorzugsweise aus einem Wertebereich zwischen etwa 50° und 60° gewählt ist.

In Weiterbildung der Erfindung ist mit Vorteil vorgesehen, dass die eingängigen Gewindeprofile eine geringe Steigung, aus einem Wertebereich zwischen 0,1 und 1,5, vorzugsweise aus einem Wertebereich zwischen 0,5 und 1 aufweisen. Die vergleichsweise niedrigen Steigungen sind von Vorteil, um eine präzise Positionseinstellung des Gewindeelementes relativ zu dem Aufnahmeteil zu gewährleisten.

Gemäß einer besonders bevorzugten Ausführungsform sind die winklig zueinander angeordneten Flanken der zum Einsatz kommenden Gewindeprofile als geneigte, ebene Flächen ausgebildet. Der Teilflankenwinkel kann jedoch auch bei einer konvexen Ausformung der Flankenflächen realisiert werden.

Insbesondere für den Fall, dass die Kontermutter als Bundmutter (sogenannte Flanschmutter), also quasi als Mutter mit integrierter Einlegescheibe, ausgebildet ist, kann auf das Vorsehen einer separaten Einlegescheibe zwischen Kontermutter und Aufnahmeteil verzichtet werden. Das Vorsehen einer Bundmutter hat den Vorteil, dass der Bund bzw. Flansch der Mutter die Aufschraubrichtung vorgibt, sodass eine Falschorientierung der Kontermutter beim Aufschrauben auf das Gewindeelement sicher vermieden werden kann.

Die Erfindung führt auch auf einen Kipphebel zum Übertragen der Kraft einer Nockenwelle auf ein Ventil eines Verbrennungsmotors. Erfindungsgemäß ist vorgesehen, dass die Konteranordnung des Kipphebels zum Einstellen des Ventilhubs wie zuvor beschrieben ausgebildet ist, dass also die zum Einsatz kommenden Gewindeprofile asymmetrische Teilflankenwinkel aufweisen.

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Fig. 1:: eine perspektivische Ansicht eines Kipphebels für einen Verbrennungsmotor mit einer Konteranordnung,
- Fig. 2:: eine Längsschnittansicht des Kipphebels gemäß Fig. 1,
- Fig. 3:: ein vergrößertes Detail Z aus der Schnittansicht gemäß Fig. 2,
- Fig. 4:: ein vergrößertes Detail Y aus Fig. 3,
- Fig. 5:: ein vergrößertes Detail X aus Fig. 3,
- Fig. 6:: eine perspektivische Darstellung eines Kipphebels mit einer alternativen Konteranordnung,
- Fig. 7:: eine Längsschnittansicht des Kipphebels gemäß Fig. 6,
- Fig. 8:: ein vergrößertes Detail Z aus der Schnittansicht gemäß Fig. 7,
- Fig. 9:: ein vergrößertes Detail Y aus Fig. 8 und
- Fig. 10:: ein vergrößertes Detail X aus Fig. 8.

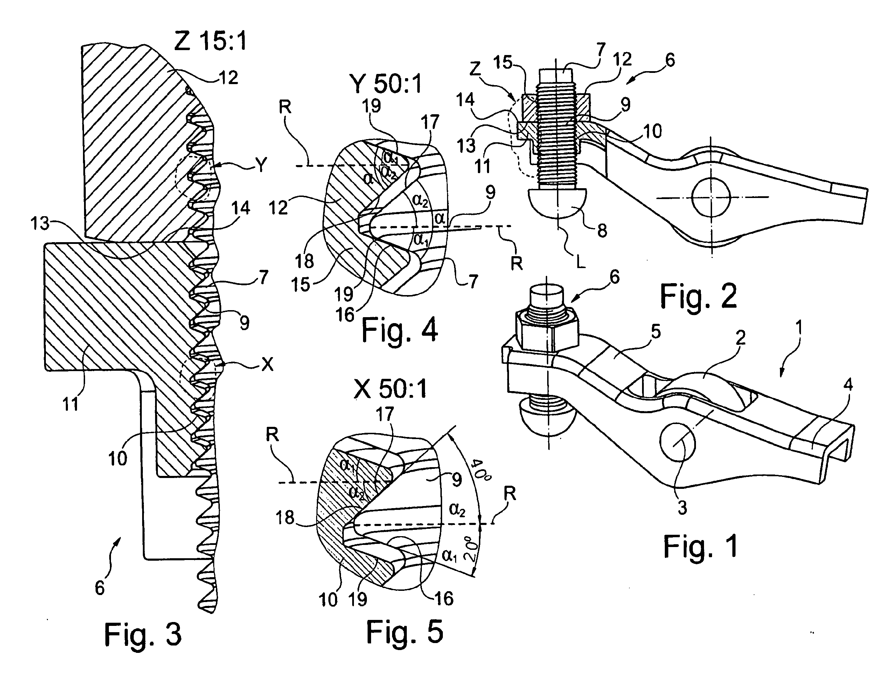

In Fig. 1 ist ein Kipphebel 1 zum Übertragen der Kraft einer nicht gezeigten Nockenwelle auf ein ebenfalls nicht gezeigtes Ventil einer Brennkraftmaschine gezeigt. Der Kipphebel 1 umfasst ein Schwenklager 2, das ein Verschwenken des Kipphebels 1 um eine quer zur Längserstreckung des Kipphebels 1 orientierte Schwenkachse 3 ermöglicht. Im eingebauten Zustand wirkt auf den in der Zeichnungsebene rechten Schenkel 4 des Kipphebels 1 eine Feder, die bestrebt ist, den Kipphebel 1 im Gegenuhrzeigersinn um die Schwenkachse 3 zu verschwenken.

An dem in der Zeichnungsebene linken Schenkel 5 des Kipphebels 1 befindet sich eine Konteranordnung 6, die zum Einstellen des Ventilhubes dient.

Die Konteranordnung 6 ist aus der teilgeschnittenen Ansicht gemäß Fig. 5 im Detail ersichtlich. Die Konteranordnung 6 umfasst ein Gewindeelement 7, das als Einstellschraube dient. Dabei beaufschlagt ein in der Zeichnungsebene unterer Schraubenkopf 8 des Gewindeelementes 7 das nicht gezeigte Ventil. Wie aus Fig. 2 zu entnehmen ist, umfasst das Gewindeelement 7 ein eingängiges Außengewinde mit einem Außengewindeprofil 9. Mit Hilfe des Außengewindeprofils 9 ist das Gewindeelement 7 in einem eingängigen Innengewinde mit einem ersten Innengewindeprofil 10 eines Aufnahmeteils 11, genauer in einer Innengewindebohrung des Aufnahmeteils 11, aufgenommen, wobei das Aufnahmeteil 11 von dem in der Zeichnungsebene linken Schenkel 5 des Kipphebels 1 gebildet ist. Ferner umfasst die Konteranordnung 6 eine Kontermutter 12, die mit ihrer in der Zeichnungsebene unteren Stirnseite 13 gegen eine in der Zeichnungsebene obere Stirnseite 14 des Aufnahmeteils 11, genauer des in der Zeichnungsebene linken Schenkels 5 verschraubt ist. Hierzu sitzt die Kontermutter 12 mit einem ein zweites Innengewindeprofil 15 aufweisenden Innengewinde auf dem Außengewindeprofil 9 des Gewindeelementes 7.

Aufgrund der im Folgenden noch zu erläuternden Ausgestaltung des Außengewindeprofils 9 und der Innengewindeprofile 10, 15 wird sicher verhindert, dass das Gewindeelement 7 beim Anziehen der Kontermutter 12 mit in Umfangsrichtung verdreht und somit in Richtung der Längsmittelachse L der Konteranordnung 6 bzw. des Gewindeelementes 7 verstellt wird.

Im Folgenden wird der Aufbau der Konteranordnung 6 anhand der Detailausschnitte gemäß den Fig. 3 bis 5 näher erläutert. Zu erkennen ist in Fig. 3 das Aufnahmeteil 11 mit seinem am Innenumfang einer Gewindebohrung ausgebildeten ersten Innengewindeprofil 10, das in verschraubter Wechselwirkung steht mit dem korrespondierenden Außengewindeprofil 9 des Gewindeelementes 7. Auf das Außengewindeprofil 9 des Gewindeelementes 7 ist wiederum die Kontermutter 12 geschraubt, die sich mit ihrer in der Zeichnungsebene unteren, planen Stirnseite 13 an der in der Zeichnungsebene oberen, ebenfalls planen Stirnseite 14 des Aufnahmeteils 11 abstützt.

Wie sich bereits aus Fig. 3 ergibt, sind die Gewindeprofile (Außengewindeprofil 9, erstes und zweites Innengewindeprofil 10, 15) der Konteranordnung 6 jeweils asymmetrisch ausgeformt und weisen jeweils zwei ein Teilflankenwinkelpaar bildende, unterschiedlich große Teilflankenwinkel auf, die im Folgenden anhand der Fig. 4 und 5 erläutert werden.

In Fig. 4 ist die Gewindepaarung, umfassend das Außengewindeprofil 9 des Gewindeelementes 7 und das zweite Innengewindeprofil 15 der Kontermutter 12 gezeigt. Dargestellt ist der fest angezogene Zustand der Kontermutter 12. Zu erkennen ist, dass sowohl das Außengewindeprofil 9 als auch das zweite Innengewindeprofil 15 unterschiedlich große Teilflankenwinkel α₁ und α₂ aufweisen, wobei zwei Teilflankenwinkel α₁, α₂ jedes Gewindeprofils ein Teilflankenwinkelpaar mit einem Flankenwinkel α bilden. Der Flankenwinkel α jedes Teilflankenwinkelpaares α₁, α₂ ergibt sich aus der Summe der jeweiligen beiden Teilflankenwinkel α₁ und α₂. Zu erkennen ist, dass die Teilflankenwinkel α₁ und α₂ jeweils aufgespannt sind zwischen einer Flanke 15, 17, 18, 19 des jeweiligen Gewindeprofils und einer zugehörigen Radialen R (Achse), die durch den Scheitelpunkt des jeweiligen (geschnittenen) Gewindeprofils verläuft. Wie sich weiter aus Fig. 4 ergibt, ist der in der Zeichnungsebene untere Teilflankenwinkel α₁ des Außengewindeprofils 9 kleiner als der zugehörige Teilflankenwinkel α₂ des Außengewindeprofils 9 in der Zeichnungsebene oben. Zwangsläufig ist der in der Zeichnungsebene obere Teilflankenwinkel α₁ des zweiten Innengewindeprofils 15 kleiner als der in der Zeichnungsebene untere, zugehörige Teilflankenwinkel α₂. Anders ausgedrückt liegen sich also jeweils die steiler zur Radialen R geneigten Flanken 16, 19 des Außengewindeprofils 9 und des zweiten Innengewindeprofils 15 sowie jeweils die flacher zur Radialen R geneigten Flanken 17, 18 des Außengewindeprofils 9 und des zweiten Innengewindeprofils 15 gegenüber, wobei sich weiter aus Fig. 4 ergibt, dass die (relativ zur Radialen) flacher geneigten Flanken 17, 18 etwas voneinander beabstandet sind, wohingegen sich die (relativ zur Radialen) steileren Flanken 16, 19 unmittelbar aneinander abstützen. Wie sich aus Fig. 5 ergibt, die ebenfalls die Teilflankenwinkel α₁ und α₂ des Außengewindeprofils 9 zeigt, beträgt der Teilflankenwinkel α₁ 20° und der Teilflankenwinkel α₂ 40°, der daraus resultierende Flankenwinkel des Teilflankenwinkelpaares also 60°. Die Teilflankenwinkel α₁ und α₂ des in Fig. 4 gezeigten zweiten Innengewindeprofils 15 sowie des ersten Innengewindeprofils 10 (vgl. Fig. 5) sind analog bemessen.

Wie sich aus Fig. 5 ergibt sind auch hier die größeren Teilflankenwinkel α₂ der miteinander korrespondierenden Gewindeprofile (Außengewindeprofil 9 und erstes Innengewindeprofil 10) einander zugewandt, ebenso wie die zugehörigen Teilflankenwinkel α₁ des Außengewindeprofils 9 und des ersten Innengewindeprofils 10. Anders ausgedrückt liegen die sich jeweils die zur Radialen flacher ansteigenden Flanken 17, 18 sowie die steileren Flanken 16, 19 gegenüber.

Anders als bei der Paarung des Außengewindeprofils 9 und des zweiten Innengewindeprofils 15 (vgl. Fig. 4) sind bei der Gewindeprofilpaarung gemäß Fig. 5, umfassend das Außengewindeprofil 9 und das erste Innengewindeprofil 10, nicht die flacheren Flanken 17, 18, sondern die steileren Flanken 17, 19 voneinander beabstandet. Es liegen also die mit der Radialen den größeren Teilflankenwinkel α₂ aufspannenden Flanken 17, 18 aneinander an, wodurch die Keilwirkung zwischen dem Außengewindeprofil 9 und dem ersten Innengewindeprofil 10 größer ist als die Keilwirkung zwischen dem Außengewindeprofil 9 und dem zweiten Innengewindeprofil 15, wodurch wiederum die Reibung zwischen dem Außengewindeprofil 9 des Gewindeelementes 7 und dem ersten Innengewindeprofil 10 größer ist als die Reibung zwischen dem Außengewindeprofil 9 und dem zweiten Innengewindeprofil 15 der Kontermutter 12, wodurch in der Folge eine unbeabsichtigte Mitnahme des ersten Gewindeelementes 7 beim Festziehen der Kontermutter 12 vermieden wird.

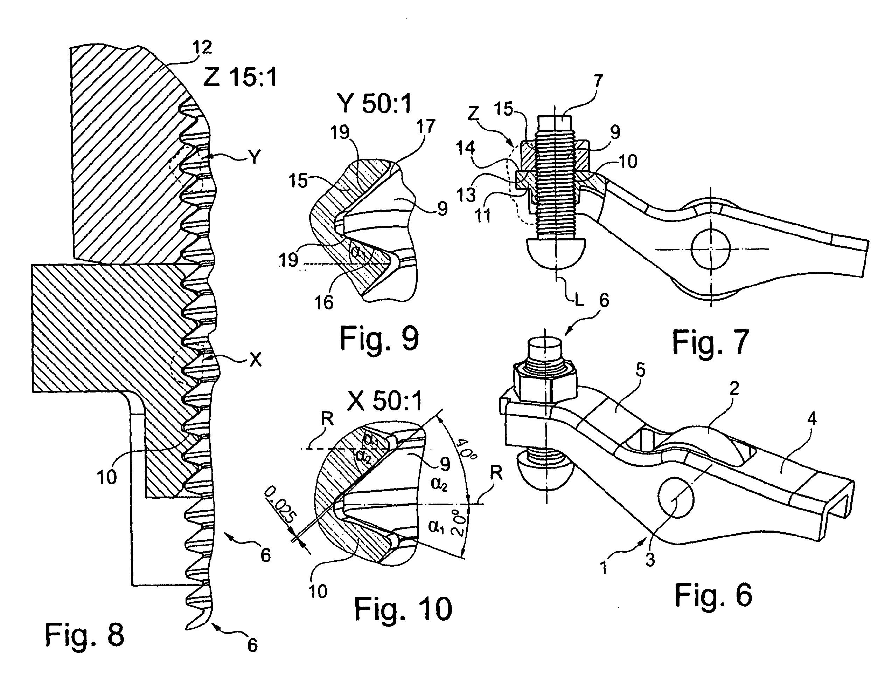

Im Folgenden wird das Ausführungsbeispiel gemäß der Fig. 6 bis Fig. 10 näher beschrieben, das von seinem wesentlichen Aufbau her dem in den Fig. 1 bis Fig. 5 gezeigten und zuvor beschriebenen Ausführungsbeispiel entspricht. Zur Vermeidung von Wiederholungen wird daher im Folgenden im Wesentlichen nur auf die Unterschiede zu dem zuvor beschriebenen Ausführungsbeispiel eingegangen. Im Hinblick auf die Gemeinsamkeiten wird auf die vorhergehende Figurenbeschreibung verwiesen.

Auch bei dem in den Fig. 6 bis Fig. 10 gezeigten Ausführungsbeispiel sind die Teilflankenwinkel α₁ und α₂ der Teilflankenwinkelpaare sämtlicher Gewindeprofile (Außenprofil 9, erstes Innengewindeprofil 10, zweites Innengewindeprofil 15) unterschiedlich groß. Analog zu dem zuvor beschriebenen Ausführungsbeispiel ist der Kontermutter 12 kleinere Teilflankenwinkel α₁ des ersten Innengewindeprofils 10 zugewandt.

Im Gegensatz zu dem zuvor beschriebenen Ausführungsbeispiel sind die Flanken 16, 17, 18, 19 nicht plan, sondern leicht konvex oder konkav gekrümmt ausgeformt. Die Flanken 16, 17, 18, 19 sind also quer zu ihrer Längserstreckung, d.h. in Richtung der Längserstreckung der Konteranordnung 6 gewölbt ausgeformt.

## Patentansprüche

1. Konteranordnung, mit einem ein eingängiges Außengewindeprofil (9) aufweisenden Gewindeelement, das mit seinem Außengewindeprofil (9) in ein eingängiges erstes Innengewindeprofil (10) eines Aufnahmeteils (11) schraubbar ist, und mit einer ein eingängiges zweites Innengewindeprofil (15) aufweisenden Kontermutter (12) zum Verschrauben auf das Außengewindeprofil (9) des Gewindeelementes gegen das Aufnahmeteil (11) oder gegen eine ggf. zwischen der Kontermutter (12) und dem Aufnahmeteil (11) angeordneten Einlegescheibe,
**dadurch gekennzeichnet,**
**dass** sowohl das Außengewindeprofil (9), als auch das erste und das zweite Innengewindeprofil (10, 15) jeweils ein Teilflankenwinkelpaar (α₁ und α₂) mit zwei unterschiedlich großen, in Summe den zugehörigen Flankenwinkel (α) bildenden, Teilflankenwinkeln (α₁, α₂) aufweist.

2. Konteranordnung nach Anspruch 1,
**dadurch gekennzeichnet,**
**dass** der kleinere Teilflankenwinkel (α₁) des Teilflankenwinkelpaars (α₁ und α₂) des ersten Innengewindeprofils (10) des Aufnahmeteils (11) zwischen einer der Kontermutter (12) zugewandten Flanke (19) des ersten Innengewindeprofils (10) mit einer Radialen (R) aufgespannt ist.

3. Konteranordnung nach einem Ansprüche 1 oder 2,
**dadurch gekennzeichnet,**
**dass** die Winkeldifferenz zwischen den Teilflankenwinkel (α₁, α₂) jedes Teilflankenwinkelpaars (α₁ + α₂) aus einem Bereich zwischen etwa 1° bis etwa 25°, vorzugsweise zwischen etwa 5° und etwa 15° gewählt ist und/oder etwa 10° gewählt ist.

4. Konteranordnung nach einem der vorhergehenden Ansprüchen,
**dadurch gekennzeichnet,**
**dass** beide Teilflankenwinkel (α₁, α₂) eines Teilflankenwinkelpaares (α₁ + α₂) größer als 0°, vorzugsweise größer als 5°, besonders bevorzugt größer als 10° sind.

5. Konteranordnung nach einem der vorhergehenden Ansprüche,
**dadurch gekennzeichnet,**
**dass** der Flankenwinkel (α) sowohl des Außengewindeprofils (9) als auch des ersten und des zweiten Innengewindeprofils (10, 15) aus einem Bereich zwischen etwa 40° bis etwa 70°, vorzugsweise 50° bis etwa 60°, gewählt ist.

6. Konteranordnung nach einem der vorhergehenden Ansprüchen,
**dadurch gekennzeichnet,**
**dass** sowohl das Außengewindeprofil (9), als auch das erste und das zweite Innengewindeprofil (15) eine Steigung aus einem Bereich zwischen 0,1 und 1,5, vorzugsweise zwischen 0,5 und 1 aufweisen.

7. Konteranordnung nach einem der vorhergehenden Ansprüche,
**dadurch gekennzeichnet,**
**dass** zumindest eine Flanke (16, 17, 18, 19) jedes der Gewindeprofile, vorzugsweise beide Flanken (16, 17, 18, 19), als ebene Fläche/n ausgebildet ist/sind oder dass zumindest eine der Flanken (16, 17, 18, 19) zumindest eines der Gewindeprofile, vorzugsweise sämtliche Flanken (16, 17, 18, 19) sämtlicher Gewindeprofile, konvex oder konkav gewölbt ist/sind.

8. Konteranordnung nach einem der vorhergehenden Ansprüche,
**dadurch gekennzeichnet,**
**dass** die Kontermutter (12) als Bundmutter ausgebildet ist.

9. Kipphebel zum Übertragen der Kraft einer Nockenwelle auf ein Ventil eines Verbrennungsmotors mit einer Konteranordnung (6) zum Einstellen des Ventilhubs,
**dadurch gekennzeichnet,**
**dass** die Konteranordnung (6) nach einem der vorhergehenden Ansprüche ausgebildet ist.

## Claims

1. Locknut fixing arrangement, comprising a threaded member, which has a simple external threaded profile (9) and of which the external threaded profile (9) can be screwed into a simple first internal threaded profile (10) of a receiving part (11), and comprising a locknut (12), which has a simple second internal threaded profile (15) and is to be screwed onto the external threaded profile (9) of the threaded member, against the receiving part (11) or against a washer which is optionally arranged between the locknut (12) and the receiving part (11), **characterised in that** the external threaded profile (9) and the first and second internal threaded profile (10, 15) each have a partial flank angle pair (α₁ and α₂) having two different partial flank angles (α₁, α₂) which add up to the associated flank angle (α).

2. Locknut fixing arrangement according to claim 1, **characterised in that** the smaller partial flank angle (α₁) of the partial flank angle pair (α₁ and α₂) of the first internal threaded profile (10) of the receiving part (11) extends between a flank (19), facing the locknut (12), of the first internal threaded profile (10) and a radial line (R).

3. Locknut fixing arrangement according to either claim 1 or claim 2, **characterised in that** the difference between the partial flank angles (α₁, α₂) of each partial flank angle pair (α₁ + α₂) is selected from a range of approximately 1° to approximately 25°, preferably approximately 5° to approximately 15°, and/or is selected as approximately 10°.

4. Locknut fixing arrangement according to any one of the preceding claims, **characterised in that** both of the partial flank angles (α₁, α₂) of a partial flank angle pair (α₁ + α₂) are greater than 0°, preferably greater than 5°, particularly preferably greater than 10°.

5. Locknut fixing arrangement according to any one of the preceding claims, **characterised in that** the flank angle (α) of the external threaded profile (9) and of the first and second internal threaded profile (10, 15) is selected from a range of approximately 40° to approximately 70°, preferably 50° to approximately 60°.

6. Locknut fixing arrangement according to any one of the preceding claims, **characterised in that** the external thread profile (9) and the first and second internal threaded profile (15) have a pitch from a range of 0.1 to 1.5, preferably 0.5 to 1.

7. Locknut fixing arrangement according to any one of the preceding claims, **characterised in that** at least one flank (16, 17, 18, 19) of each of the threaded profiles, preferably both flanks (16, 17, 18, 19), is formed as a planar surface, or **in that** at least one of the flanks (16, 17, 18, 19) of one of the threaded profiles, preferably all of the flanks (16, 17, 18, 19) of all of the threaded profiles, is convexly or concavely curved.

8. Locknut fixing arrangement according to any one of the preceding claims, **characterised in that** the locknut (12) is formed as a flanged nut.

9. Rocker arm for transferring the force of a camshaft to a valve of a combustion engine, comprising a locknut fixing arrangement (6) for adjusting the valve lift, **characterised in that** the locknut fixing arrangement (6) is formed in accordance with one of the preceding claims.

## Revendications

1. Agencement de blocage par contre-écrou, avec un élément fileté présentant un profil fileté extérieur (9) à un filet, qui peut être vissé par son profil fileté extérieur (9) dans un premier profil fileté intérieur (10) à un filet d'une pièce de réception (11), et avec un contre-écrou (12) présentant un deuxième profil fileté intérieur (15) à un filet, à visser sur le profil fileté extérieur (9) de l'élément fileté contre la pièce de réception (11) ou contre une rondelle disposée éventuellement entre le contre-écrou (12) et la pièce de réception (11), **caractérisé en ce qu'**aussi bien le profil fileté extérieur (9) que le premier et le deuxième profils filetés intérieurs (10, 15) présentent respectivement une paire d'angles de flanc partiels (α1 et α2) avec deux angles de flanc partiels (α1, α2) de grandeur différente dont la somme forme l'ange de flanc correspondant (α).

2. Agencement de blocage par contre-écrou selon la revendication 1, **caractérisé en ce que** le plus petit angle de flanc partiel (α1) de la paire d'angles de flanc partiels (α1 et α2) du premier profil fileté intérieur (10) de la pièce de réception (11) est compris entre un flanc (19) tourné vers le contre-écrou (12) du premier profil fileté intérieur (10) et une radiale (R).

3. Agencement de blocage par contre-écrou selon l'une quelconque des revendications 1 ou 2, **caractérisé en ce que** la différence d'angle entre les angles de flanc partiels (α1, α2) de chaque paire d'angles de flanc partiels (α1 + α2) est choisie dans une plage comprise entre environ 1° et environ 25°, de préférence entre environ 5° et environ 15°, et/ou vaut environ 10°.

4. Agencement de blocage par contre-écrou selon l'une quelconque des revendications précédentes, **caractérisé en ce que** les deux angles de flanc partiel (α1, α2) d'une paire d'angles de flanc partiels (α1 + α2) sont plus grands que 0°, de préférence plus grands que 5°, et en particulier de préférence encore plus grands que 10°.

5. Agencement de blocage par contre-écrou selon l'une quelconque des revendications précédentes, **caractérisé en ce que** l'angle de flanc (α) aussi bien du profil fileté extérieur (9) que du premier et du deuxième profils filetés intérieurs (10, 15) est choisi dans une plage comprise entre environ 40° et environ 70°, de préférence entre 50° et environ 60°.

6. Agencement de blocage par contre-écrou selon l'une quelconque des revendications précédentes, **caractérisé en ce qu'**aussi bien le profil fileté extérieur (9) que le premier et le deuxième profils filetés intérieurs (15) présentent un pas choisi dans une plage comprise entre 0,1 et 1,5, de préférence entre 0,5 et 1.

7. Agencement de blocage par contre-écrou selon l'une quelconque des revendications précédentes, **caractérisé en ce qu'**au moins un flanc (16, 17, 18, 19) de chacun des profils filetés, de préférence les deux flancs (16, 17, 18, 19), est/sont réalisés sous forme de surface(s) plane(s) ou **en ce qu'**au moins un des flancs (16, 17, 18, 19) d'au moins un des profils filetés, de préférence tous les flancs (16, 17, 18, 19) de tous les profils filetés, est/sont incurvés de façon convexe ou concave.

8. Agencement de blocage par contre-écrou selon l'une quelconque des revendications précédentes, **caractérisé en ce que** le contre-écrou (12) se présente sous la forme d'un écrou à collet.

9. Culbuteur pour la transmission d'une force d'un arbre à came à une soupape d'un moteur à combustion interne avec un agencement de blocage par contre-écrou (6) pour le réglage de la course de la soupape, **caractérisé en ce que** l'agencement de blocage par contre-écrou (6) est réalisé selon l'une quelconque des revendications précédentes.
